# FASCICULE DE BREVET EUROPEEN

(11) **EP 3 389 963 B1**
(45) Date de publication et mention de la délivrance du brevet: **18.03.2020**
(21) Numéro de dépôt: 16825541.2
(22) Date de dépôt: 16.12.2016
(51) Int. Cl.: B26D 7/27, B26F 1/40, B26D 7/18, B32B 38/04

(54) **RÉALISATION D'UNE FENÊTRE DANS UNE COUCHE EN PLASTIQUE MINCE**
VERFAHREN FÜR DIE HERSTELLUNG EINES FENSTERS IN EINER SCHICHT VON WEICHEM KUNSTSTOFF
METHOD FOR MAKING A WINDOW IN A LAYER OF SOFT PLASTIC

(30) Priorité: 17.12.2015 FR 1562684
(43) Date de publication de la demande: 24.10.2018
(73) Titulaire: Idemia France, 92700 Colombes (FR)
(72) Inventeur: LAMY, Nicolas, 92700 Colombes (FR)
(74) Mandataire: Santarelli
(86) Numéro de dépôt international: PCT/FR2016/053529
(87) Numéro de publication internationale: WO 2017/103541

(56) Documents cités:
- EP-A1- 2 886 267
- WO-A1-2015/104011
- JP-A- H11 239 999

## Description

La présente invention concerne la réalisation d'une fenêtre dans une couche en plastique mince, nommée couche d'accueil, par insertion d'une pastille issue d'une autre couche en plastique mince, nommée couche de fourniture.

Une telle réalisation permet de réaliser dans une couche d'accueil une fenêtre présentant des caractéristiques différentes, par exemple de matière ou de couleur. Un mode particulier permet d'obtenir, avec une couche de fourniture adaptée, une fenêtre transparente ou translucide.

Il est connu de EP 2886267 un procédé en trois étapes. Un outil, comprenant un emporte-pièce creux tranchant sur sa périphérie, correspondant au contour de la pastille, est utilisé durant une première étape pour découper une pastille dans une couche de fourniture. La pastille reste dans le creux de l'emporte-pièce suite à la découpe. Au cours d'une deuxième étape, l'outil est déplacé et repositionné dans une lumière, préalablement découpée dans une couche d'accueil. L'outil comporte encore un piston, disposé dans le creux de l'emporte-pièce, et utilisé, au cours d'une troisième étape, pour mettre la pastille en place dans la lumière.

Un tel procédé présente l'inconvénient d'un outil complexe. De plus le repositionnement de l'outil dans la lumière doit être particulièrement précis afin que l'emporte-pièce ne découpe pas la couche d'accueil.

La présente invention remédie à ces différents inconvénients et propose une solution alternative plus simple.

L'invention a pour objet un procédé de réalisation d'une fenêtre dans une couche d'accueil en plastique mince, par insertion d'une pastille issue d'une couche de fourniture en plastique mince, comprenant les étapes suivantes : découpe d'une lumière dans la couche d'accueil selon la forme de la future fenêtre, poinçonnage de la couche de fourniture pour produire une pastille et insertion de la pastille dans la lumière, où le poinçonnage et au moins une première phase de l'insertion sont réalisés en un unique déplacement d'un outil unique de poinçonnage et d'insertion, selon une direction allant de la couche de fourniture jusque dans la couche d'accueil et où un contre-outil coaxial à l'outil de poinçonnage et d'insertion, et opposé relativement à la couche d'accueil, collabore avec l'outil de poinçonnage et d'insertion, et s'oppose au déplacement de la pastille, pour positionner la pastille dans la lumière.

Selon une autre caractéristique, l'outil de poinçonnage et d'insertion comprend un poinçon plat.

Selon une autre caractéristique, l'étape d'insertion comprend une étape de poussée de la pastille au-delà de sa position finale, suivie d'une étape de contre-poussée en sens opposé.

Selon une autre caractéristique, la forme de la pastille est sensiblement identique à la forme de la lumière, et l'épaisseur de la couche de fourniture est sensiblement égale à l'épaisseur de la couche d'accueil.

Selon une autre caractéristique, la matière de la pastille est transparente.

Selon une autre caractéristique, les couches d'accueil et de fourniture sont disposées horizontalement.

Selon une autre caractéristique, les couches d'accueil et de fourniture sont disposées verticalement.

Selon une autre caractéristique, l'outil de découpe se confond avec l'outil de poinçonnage et d'insertion, et travaille au travers de la couche de fourniture.

Selon une autre caractéristique, l'outil de découpe est distinct de l'outil de poinçonnage et d'insertion.

Selon une autre caractéristique, l'outil de découpe est coaxial à l'outil de poinçonnage et d'insertion, et opposé relativement aux couches d'accueil et de fourniture.

Selon une autre caractéristique, l'outil de découpe et le contre-outil sont confondus.

Selon une autre caractéristique, un copeau de découpe est évacué au travers de la couche de fourniture.

Selon une autre caractéristique, un copeau de découpe est évacué entre la couche d'accueil et la couche de fourniture.

L'invention concerne aussi un procédé de fabrication d'une carte d'identité comportant au moins une couche d'accueil et deux couches externes transparentes, le procédé comportant les étapes de réalisation d'une fenêtre suivie une étape de lamination des couches externes et de la couche d'accueil.

D'autres caractéristiques, détails et avantages de l'invention ressortiront plus clairement de la description détaillée donnée ci-après à titre indicatif en relation avec des dessins sur lesquels :
- les figures 1 à 3 illustrent deux étapes principales du procédé :
- la figure 1 illustre l'état initial,
- la figure 2 illustre l'étape de poinçonnage,
- la figure 3 illustre l'étape d'insertion,
- la figure 4 illustre une étape optionnelle et le rentrage en bande,
- la figure 5 illustre la découpe d'une lumière selon un premier mode de réalisation,
- la figure 6 illustre la découpe d'une lumière selon un autre mode de réalisation, ainsi qu'une éjection de copeau au travers de la couche de fourniture,
- les figures 7 et 8 illustrent un autre mode d'éjection de copeau,
- les figures 9-11 illustrent la découpe d'une lumière simultanée avec l'insertion,
- la figure 12 illustre un exemple de liaison entre une pastille insérée dans une lumière et une couche de couverture.

L'objectif du procédé est la réalisation d'une fenêtre dans une couche 1 en plastique mince, désignée couche d'accueil 1. Ceci est réalisé en insérant une pastille 3 issue d'une autre couche en plastique mince, désignée couche de fourniture 2.

Le procédé s'applique tout particulièrement à la fabrication des documents d'identité, tels qu'une carte d'identité ou un permis de conduire, présentant une faible épaisseur, inférieur à 1mm. Traditionnellement, les documents d'identité comportant une telle couche mince en plastique présentent les dimensions spécifiées dans la norme ISO7810, c'est-à-dire 85,6mm ^{∗} 53,98mm ^{∗} 0,76mm.

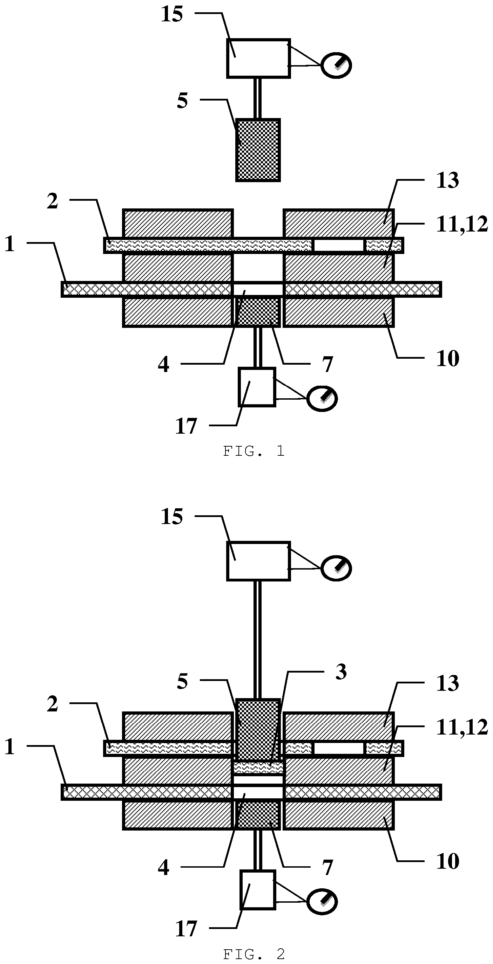

Les figures 1-3 illustrent deux étapes essentielles du procédé.

La figure 1 illustre l'état préalable. Les couches d'accueil 1 et de fourniture sont disposées face à face. Elles sont immobilisées par un jeu de matrices et serres-flancs 10-13, décrits plus loin. La couche d'accueil 1 comporte une cavité traversante 4, nommée dans la suite de la description « lumière » 4, dont la forme du contour correspond à la forme souhaitée pour la future fenêtre. Un outil 5, avec ses moyens de manœuvre 15, est disposé en regard de la lumière 4. La couche de fourniture 2 est placée entre l'outil 5 et la lumière 4.

La figure 2 illustre une étape durant laquelle est réalisée une opération de poinçonnage de la couche de fourniture 2 pour produire une pastille 3.

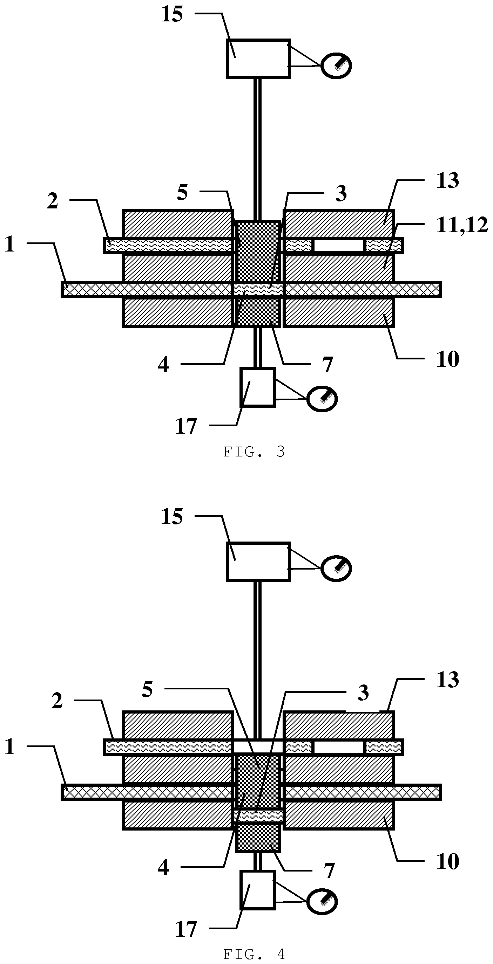

La figure 3 illustre une étape ultérieure durant laquelle est réalisée une opération d'insertion de cette pastille 3 dans la lumière 4 de la couche d'accueil 1.

Une caractéristique de l'invention est que les deux opérations de poinçonnage et d'insertion sont quasi simultanément réalisées en un unique déplacement, selon une direction allant de la couche de fourniture 2 vers la couche d'accueil 1. De plus ces deux opérations sont réalisées au moyen d'un outil 5 unique de poinçonnage et d'insertion.

Les opérations étant réalisées de la couche de fourniture 2 vers la couche d'accueil 1, l'outil 5 de poinçonnage et d'insertion est initialement disposé du côté de la couche de fourniture 2.

Selon un mode de réalisation avantageux, le poinçonnage est réalisé par cisaillement de la matière de la couche de fourniture 2. Pour cela, selon un mode réalisation, l'outil 5 comprend avantageusement un poinçon sensiblement plat.

Tel que plus particulièrement visible aux figures 1-3, un contre-outil 7, avec ses moyens de manœuvre 17, peut avantageusement être employé par le procédé. Un tel contre-outil 7 est alors disposé sensiblement coaxial à l'outil 5 de poinçonnage et d'insertion, et opposé relativement à la couche d'accueil 1. Un tel contre-outil 7 collabore avec l'outil 5 et, en s'opposant au déplacement de la pastille 3, permettre de positionner ladite pastille 3 en profondeur, dans la couche d'accueil 1. La position finale souhaitée pour la pastille 3 est telle que les deux faces de la pastille 3 soient toutes deux affleurantes aux faces de la couche d'accueil 1.

Pour cela la surface utile du contre-outil 7 est avantageusement, telle qu'elle se retrouve en fin d'opération d'insertion, sensiblement affleurante à la surface de la couche d'accueil 1, du côté opposé à l'outil 5.

Le contre-outil 7 peut être actif en ce qu'il est déplacé tel un vérin. Il peut encore être passif ou complaisant. Ainsi sa complaisance peut permettre d'absorber l'énergie de l'outil 5, tout en assurant un retour affleurant à la surface de la couche d'accueil 1.

Selon un mode de réalisation, la pastille 3 issue de la couche de fourniture 2 est uniquement poussée jusqu'à sa position finale, insérée dans la couche d'accueil 1, où elle est, par exemple, arrêtée en profondeur par le contre-outil 7.

Un poinçonnage par cisaillement de la matière de la couche de fourniture 2 présente l'inconvénient de potentiellement produire un fil de matière après l'arrachement par l'outil 5 de poinçonnage.

Un tel fil n'est pas gênant, en ce qu'il est peu visible dans le cas où le matériau de la pastille 3 est transparent.

Selon un mode de réalisation alternatif, afin de supprimer ce fil de matière il est possible de procéder comme suit. L'opération d'insertion est décomposée en deux temps. Dans un premier temps est réalisée une étape de poussée de la pastille 3, dans la direction allant de la couche de fourniture 2 à la couche d'accueil 1. Cette poussée, comme précédemment est poursuivie jusqu'à ce que la pastille 3 atteigne sa position finale, où elle affleure à la surface de la couche d'accueil 1. Cependant, cette poussée est poursuivie de manière à ce que la pastille 3 dépasse ladite position finale, et ressorte, au moins partiellement de la couche d'accueil 1.

La figure 4 illustre cette étape, optionnelle, qui s'intercale, dans ce cas, chronologiquement entre les figures 2 et 3.

L'étape de poussée est suivie d'une étape de contre-poussée en sens opposé, soit dans la direction allant de la couche d'accueil 1 vers la couche de fourniture 2, jusqu'à ce que la pastille 3 atteigne finalement sa position finale.

Selon l'invention la poussée est réalisée par l'outil 5 de poinçonnage et d'insertion. La contre-poussée est assurée par un contre-outil 7, passif ou actif.

Cette opération d'insertion réalisée selon deux directions opposées, en un mouvement aller/retour, réalise ce que l'on nomme encore un « rentrage en bande » et permet de supprimer un éventuel fil de matière.

Selon une caractéristique, la pastille 3, et avec elle l'outil 5 de poinçonnage, présente une forme sensiblement identique à la forme de la lumière 4. De même, l'épaisseur de la couche de fourniture 2, et avec elle l'épaisseur de la pastille 3 qui en est issue, est sensiblement égale à l'épaisseur de la couche d'accueil 1, et avec elle l'épaisseur de la lumière 4. Ainsi la pastille 3 présente naturellement les dimensions de la lumière 4 dans laquelle elle vient prendre place.

Ceci n'est pas obligatoire. Selon un mode de réalisation alternatif, si la matière permet un certain fluage, le cas échéant à chaud, la pastille peut présenter une surface dans le plan des couches 1,2, inférieure à celle de la lumière 4. La pastille 3, et avec elle la couche de fourniture 2, présente alors avantageusement une épaisseur augmentée, de telle manière à ce que la pastille 3 conserve un volume constant, égal au volume de la lumière 4. Au cours de l'insertion, ou au cours d'une étape ultérieure, un pressage, ou laminage, le cas échéant limité à la fenêtre, est réalisé afin que la pastille 3 flue et occupe complètement le volume de la lumière 4.

La couche d'accueil 1 et la couche de fourniture 2 présentent avantageusement une épaisseur au moins égale à 300µm, et de préférence comprise entre 400 à 600 µm.

La couche d'accueil 1 et la couche de fourniture 2 sont avantageusement en polycarbonate, PC. Elles peuvent encore être en tout autre matériau plastique, tel que : PVC, PEC, PETF, PETG, etc.

Le procédé est avantageux en ce que la matière de la pastille 3 peut présenter une propriété différente de celle de la couche d'accueil 1. Le procédé permet ainsi de transférer localement cette propriété à la fenêtre. Le procédé peut aussi être utilisé pour réparer une couche d'accueil 1, le cas échéant avec une matière identique.

Ladite propriété peut être liée à la matière, à la couleur, à une caractéristique physique, par exemple de conduction électrique, ou encore chimique, telle une présence d'un dopage permettant de réagir à un laser, etc. Pour que la pastille 3 hérite de cette propriété il convient que la couche de fourniture 2 possède cette propriété dans son entièreté, ou au moins au droit des zones d'où sont poinçonnées les pastilles 3.

Une propriété particulière de la pastille 3 est d'être transparente, respectivement translucide. Le procédé permet alors avantageusement de réaliser une fenêtre transparente, respectivement translucide, dans une couche d'accueil 1.

Tel qu'illustré aux figures 1-5 le procédé peut être réalisé avec les couches d'accueil 1 et de fourniture 2 disposées horizontalement. Dans ce cas, les axes des outils 5,6,7 sont sensiblement perpendiculaires aux couches 1,2, soit sensiblement verticaux.

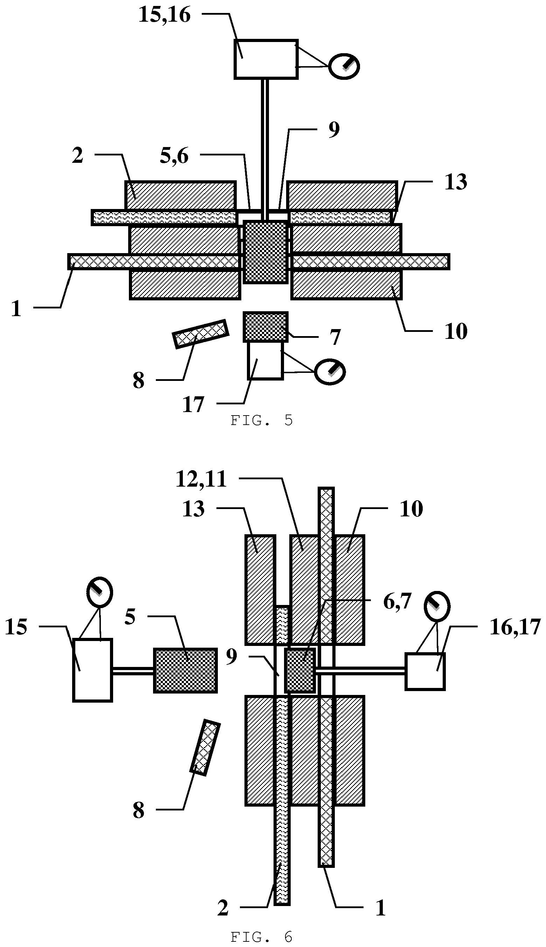

Alternativement, tel qu'illustré aux figures 6-8, et de manière totalement interchangeable, et pour tous les modes de réalisation décrits, le procédé peut être réalisé avec les couches d'accueil 1 et de fourniture 2 disposées verticalement. Dans ce cas, les axes des outils 5,6,7 sont sensiblement perpendiculaires, soit sensiblement horizontaux.

Les modes où les couches 1,2 sont verticales présentent l'avantage que lesdites couches 1,2 se tendent spontanément sous l'effet de la pesanteur, évitant ainsi tout galbe préjudiciable.

Pour que la pastille 3 puisse être insérée, il convient préalablement à l'insertion, de découper la lumière 4. Cette découpe est réalisée dans la couche d'accueil 1. La forme découpée pour la lumière 4 est la forme souhaitée pour la future fenêtre.

Selon un mode de réalisation, illustré à la figure 5, un outil 6 de découpe, avec ses moyens de manœuvre 16, se confond avec l'outil 5 de poinçonnage et d'insertion. Puisque l'outil 5 est disposé du côté de la couche de fourniture 2, l'outil 5,6 doit traverser la couche de fourniture 2 pour atteindre la couche d'accueil 1 afin de réaliser la découpe. Ceci peut être rendu possible par un trou 9 présent dans la couche de fourniture 2. Dans le cadre d'un procédé itératif, un tel trou 9 existe en ce qu'il résulte de la production d'une précédente pastille 3. Ceci suppose que les dimensions de l'outil 6 de découpe sont identiques ou inscrites dans les dimensions d'un tel trou 9 correspondant à une pastille 3. Alternativement, il est encore possible que la découpe élargisse ledit trou 9.

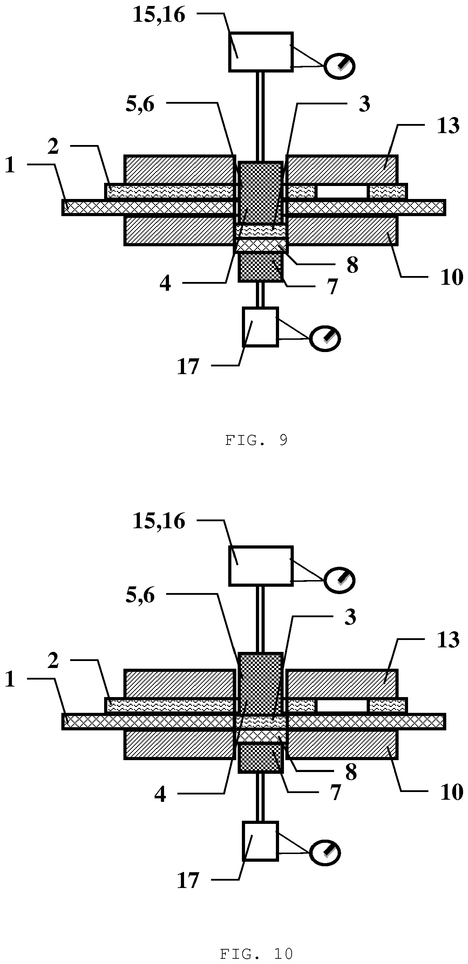

Selon une variante du mode de réalisation précédent, plus particulièrement adaptée au « rentrage en bande », et illustrée aux figures 9-11, il est possible de réaliser la découpe de la lumière 9 au cours même de l'opération qui réalise l'insertion de la pastille 3. Pour cela l'outil 6 de découpe se confond avec l'outil 5 de poinçonnage et d'insertion, comme précédemment.

Tel qu'illustré à la figure 9, ledit outil 5,6 unique découpe simultanément les deux couches 1,2. Ce faisant, l'outil 5,6 produit une pastille 3 en découpant la couche de fourniture 2. L'outil 5,6 continue sa course et réalise, en poussant la pastille 3, la lumière 9 dans la couche d'accueil 1 en produisant un copeau 8. S'agissant de rentrage en bande, la course est telle que l'outil 5,6 et la pastille 3 dépassent la couche d'accueil 1.

Tel qu'illustré à la figure 10, la course est inversée, au moyen d'une poussée de bas en haut, réalisée par exemple par le contre-outil 7. Ce deuxième mouvement s'arrête lorsque la pastille 3 est, en hauteur, exactement disposée dans la lumière 9. Lors de la poussée de bas en haut, le copeau 8 suit le mouvement.

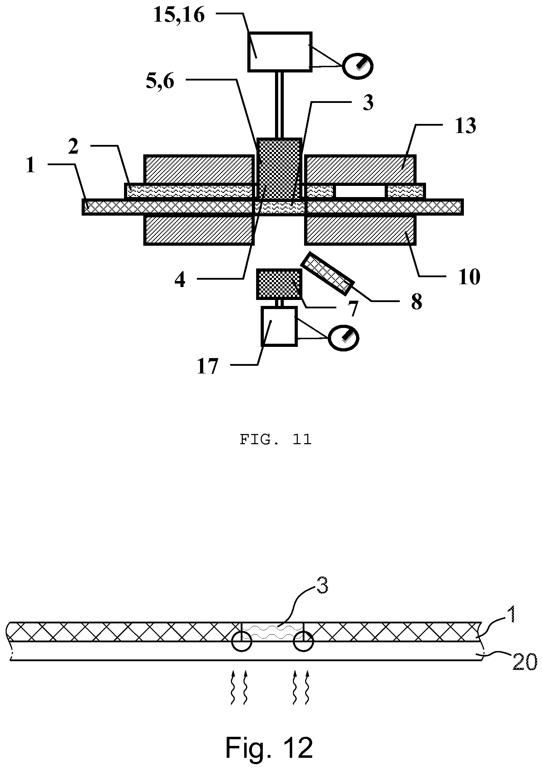

Tel qu'illustré à la figure 11, le contre-outil 7 effectue ensuite seul une nouvelle descente afin de permettre l'éjection du copeau 8.

Un tel mode de réalisation est plus particulièrement efficace dans une configuration où les deux couches 1,2 sont jointives, soit pour un dispositif ne comportant pas de matrice et/ou serre-flanc 11,12, intermédiaires, tel qu'illustré aux figures 9-11.

Un tel mode de réalisation est avantageux en ce qu'un unique outil 5,6 réalise la découpe, le poinçonnage et l'insertion. De plus la couche d'accueil 1 n'est avantageusement pas déplacée pendant ces trois opérations, relativement à l'outil 5,6, évitant tout problème d'indexation. L'indexation est une opération qui permet le positionnement précis d'une couche 1 relativement à l'autre couche 2. Cette opération de référencement complexe est avantageusement évitée lorsqu'un positionnement relatif des couches 1,2 est conservé par le procédé. Une indexation doit ici être réalisée au début de procédé et reproduite dès qu'une des couches 1,2 est déplacée par rapport au dispositif, soit dès qu'un ensemble matrice/serre- flanc est ouvert. L'outil 6 de découpe peut avantageusement être un poinçon plat. Un inconvénient, lié à l'avantage, est que l'unicité de l'outil 5,6 implique que les dimensions de la pastille 3, dans le plan des couches 1,2, sont nécessairement identiques à celles de la lumière 4.

Afin de remédier à cet inconvénient, il peut être envisagé d'autres modes de réalisation, où l'outil 6 de découpe est distinct de l'outil 5 de poinçonnage et d'insertion.

Puisque l'outil 6 de découpe est distinct, il peut avantageusement être disposé du côté de la couche d'accueil 1, tel qu'illustré aux figures 6-8, facilitant ainsi l'accès à cette couche 1. La distinction peut permettre de réaliser la découpe selon un autre principe. L'outil 6 peut être un poinçon plat, mais encore tout autre type d'outil, tel par exemple un emporte-pièce ou un autre outil coupant.

Selon un mode de réalisation, illustré par deux exemples aux figures 6-8, l'outil 6 de découpe est coaxial à l'outil 5 de poinçonnage et d'insertion. Il est avantageusement disposé en sens opposé et de l'autre côté des couches d'accueil 1 et de fourniture 2. L'outil 6 est disposé du côté de la couche d'accueil 1 et travaille selon une direction allant de la couche d'accueil 1 vers la couche de fourniture 2.

Une telle disposition est avantageuse en ce que, les deux outils 5,6 étant distincts, il est possible de leur conférer des formes, des dimensions ou encore des tolérances différentes et ainsi de varier formes, dimensions et/ou tolérances entre d'une part la lumière 4 et d'autre part la pastille 3. A formes et dimensions égales, une variation des tolérances peut permettre de varier le jeu d'insertion de la pastille 3 dans la lumière 4, afin d'obtenir un serrage plus ou moins important. De plus la couche d'accueil 1 n'est avantageusement pas déplacée pendant les trois opérations, relativement à l'outil 5,6, évitant tout problème d'indexation.

Selon ce mode de réalisation, l'outil 6 de découpe, coaxial avec l'outil 5, peut faire office de contre-outil 7 lors de l'opération d'insertion.

Une telle disposition pose le problème de l'évacuation d'un copeau 8 résultant de la découpe de la lumière 4. Au moins, deux approches sont possibles.

Selon une première approche, illustrée à la figure 6, le copeau 8 issu de la couche d'accueil 1 peut être évacué au travers de la couche de fourniture 2. Comme précédemment, ceci peut être possible via un trou 9 préalablement présent dans la couche de fourniture 2. Dans le cadre d'un procédé itératif, un tel trou 9 peut être issu de la production d'une précédente pastille 3. Ceci suppose, ici encore, que les dimensions de l'outil 6 de découpe soient identiques ou inscrites dans les dimensions d'un tel trou 9 correspondant à une pastille 3. Alternativement, il est encore possible que la découpe élargisse ledit trou 9.

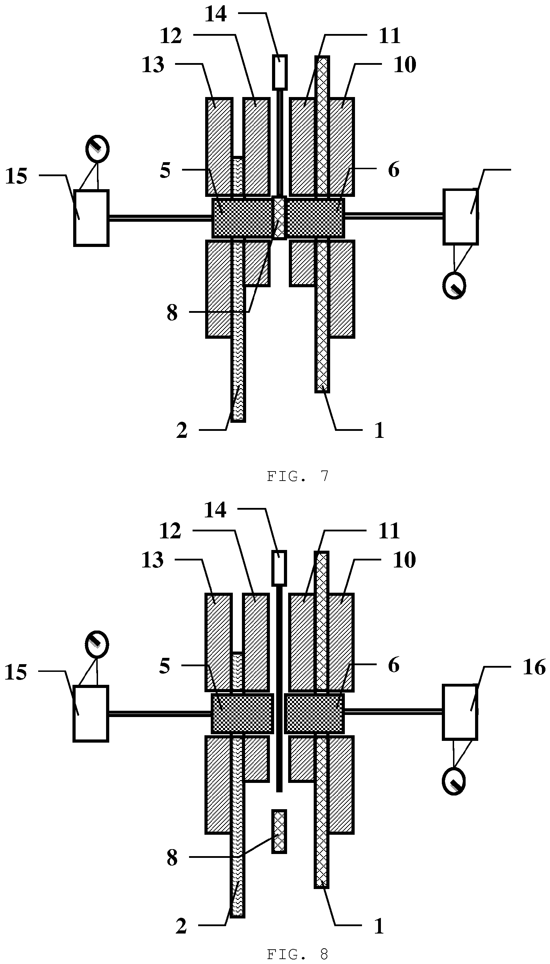

Selon une autre approche, illustrée aux figures 7-8, le copeau 8 peut être évacué entre la couche d'accueil 1 et la couche de fourniture 2. Tel qu'illustré à la figure 7, le copeau 8 est formé entre les deux couches 1,2. L'outil 5 de poinçonnage et d'insertion peut être utilisé comme contre-outil lors de la découpe. Telle qu'illustrée à la figure 8, l'évacuation du copeau 8 est ensuite réalisée par gravité avec un avantage à la disposition verticale, ou au moyen d'un éjecteur 14.

Une telle disposition combine avantageusement les avantages liés à la distinction en deux outils 5,6 et l'absence d'indexation. De plus, au prix d'une complexité augmentée, les deux outils 5,6 sont totalement indépendants n'entrainant aucune contrainte entre la lumière 4 et la pastille 3.

Il est encore possible de séparer totalement les postes en une chaîne comprenant un poste de découpe, un poste de poinçonnage et d'insertion. Dans ce cas, la couche d'accueil 1 est déplacée de poste en poste à chaque opération, avec une nécessaire indexation à chaque fois.

Après l'étape d'insertion, le procédé peut encore comprendre des étapes optionnelles, telles que : laminage, le cas échéant limité à la zone de la fenêtre, ajout de couches supplémentaires au-dessus et/ou en-dessous de la couche d'accueil 1, usinage, gravure, embossage, impression, dépôt de vernis ou de peinture, etc.

Pour la fabrication d'une carte d'identité, le procédé comprend, après l'étape d'insertion, une étape de lamination de deux couches transparentes, disposées de part et d'autre de la couche d'accueil. La pastille est ainsi maintenue dans l'épaisseur de la carte d'identité. Lors d'une opération de poinçonnage et/ou de découpe, un outil comprend un moyen pénétrant 5,6 initialement disposé d'un premier côté de la couche 1,2 à poinçonner/découper, une matrice disposée, relativement à la couche 1,2, du côté opposé, et de préférence un serre-flanc, disposé du premier côté et apte à immobiliser la couche 1,2 par serrage contre la matrice.

Ainsi, à la figure 2, pendant l'opération de poinçonnage de la couche de fourniture 2, une matrice 12, formée par la surface supérieure de la pièce référencée 12, est en contact avec la couche 2. Un serre-flanc 13 immobilise la couche 2 en la serrant contre la matrice 12.

De même, à la figure 6, pendant l'opération de découpe de la couche d'accueil 1, une matrice 11, formée par la surface droite de la pièce référencée 11, est en contact avec la couche 1. Un serre-flanc 10 immobilise la couche 1 en la serrant contre la matrice 11.

Les rôles de matrice et de serre-flanc dépendent du sens d'opération de l'outil. Ainsi en se référant à la figure 2, pour un poinçonnage de haut en bas, la couche d'accueil 1 est disposée entre une matrice 10 et un serre-flanc 11 formé par la surface inférieure de la pièce référencée 11. Au contraire, pour un poinçonnage de bas en haut, la pièce 11 fait fonction de matrice, tandis que la pièce 10 est un serre-flanc.

La, ou les, pièce(s) intermédiaire(s) 11,12, telle(s) que visible(s), par exemple, aux figures 2,6 est(sont) optionnelle(s). Tel qu'illustré à la figure 5, il est possible de disposer la couche d'accueil 1 en contact direct avec la couche de fourniture 2. Dans ce cas, pour un poinçonnage de haut en bas, l'outil 5,6 coopère avec la pièce 10 faisant fonction de matrice, et la pièce 13 fait fonction de serre-flanc.

Une telle disposition simplifie avantageusement les moyens du procédé. Selon le procédé, la couche de fourniture 2 est déplacée entre l'étape de découpe et l'étape de poinçonnage, tandis que la couche d'accueil 1 est déplacée avant l'étape de découpe, soit à des instants différents. Un déplacement d'une couche 1,2 est rendu possible en écartant le serre-flanc et la matrice correspondante. La présence d'une pièce intermédiaire 11,12, permet de maintenir une des couches 1,2, pendant que l'autre est libre. L'absence de pièce intermédiaire 11,12 entraîne alors un risque de déplacement non souhaité de la couche devant rester immobile.

Après l'insertion de la pastille dans la couche d'accueil, il peut être intéressant d'établir une liaison entre cette pastille avec une couche de couverture, ou couche externe (« overlay »), de préférence transparente. C'est ainsi que la figure 12 représente une couche d'accueil 1, dans laquelle une pastille 3 a été insérée selon l'une ou l'autre des techniques détaillées ci-dessus et qui est superposée à une couche 20 (l'ordre des couches importe peu en réalité). Deux cercles désignent des zones, à l'interface entre la pastille et la couche 20, qui ont subi un traitement thermique local ayant conduit à un soudage local entre la pastille et la couche 20 ; un tel traitement thermique peut se faire à travers la couche 20 (voir les flèches ondulées), par exemple au moyen d'un laser. Ce traitement thermique peut être accompagné de l'application d'une pression. La pastille est alors fixée de manière fiable et durable. Ce traitement thermique peut, si on le souhaite, affecter non seulement la pastille et la couche de couverture mais aussi la couche d'accueil. Il est à la portée de l'homme de métier de contrôler le traitement thermique en sorte d'éviter toute déformation local intempestive.

Une telle fixation peut avoir lieu avant ou après laminage de la couche d'accueil (et d'éventuelles autres couches) avec cette couche de couverture, ou externe, de préférence entre deux telles couches externes ; on peut ainsi obtenir, notamment une carte d'identité.

## Revendications

1. Procédé de réalisation d'une fenêtre dans une couche d'accueil (1) en plastique mince, par insertion d'une pastille (3) issue d'une couche de fourniture (2) en plastique mince, comprenant les étapes suivantes :
- découpe d'une lumière (4) dans la couche d'accueil (1) selon la forme de la future fenêtre,
- poinçonnage de la couche de fourniture (2) pour produire une pastille (3) et
- insertion de la pastille (3) dans la lumière (4),
le poinçonnage et au moins une première phase de l'insertion étant réalisés en un unique déplacement d'un outil (5) unique de poinçonnage et d'insertion, selon une direction allant de la couche de fourniture (2) jusque dans la couche d'accueil (1) ;
**caractérisé en ce que** un contre-outil (7) coaxial à l'outil (5) de poinçonnage et d'insertion, et opposé relativement à la couche d'accueil (1), collabore avec l'outil (5) de poinçonnage et d'insertion, et s'oppose au déplacement de la pastille (3), pour positionner la pastille (3) dans la lumière (4).

2. Procédé selon la revendication 1, où l'outil (5) de poinçonnage et d'insertion comprend un poinçon plat.

3. Procédé selon l'une quelconque des revendications 1 ou 2, où l'étape d'insertion comprend une étape de poussée de la pastille (3) au-delà de sa position finale, suivie d'une étape de contre-poussée en sens opposé.

4. Procédé selon l'une quelconque des revendications 1 à 3, où la forme de la pastille (3) est sensiblement identique à la forme de la lumière (4), et l'épaisseur de la couche de fourniture (2) est sensiblement égale à l'épaisseur de la couche d'accueil (1).

5. Procédé selon l'une quelconque des revendications 1 à 4, où la matière de la pastille (3) est transparente.

6. Procédé selon l'une quelconque des revendications 1 à 5, où les couches d'accueil (1) et de fourniture (2) sont disposées horizontalement.

7. Procédé selon l'une quelconque des revendications 1 à 5, où les couches d'accueil (1) et de fourniture (2) sont disposées verticalement.

8. Procédé selon l'une quelconque des revendications 1 à 7, où l'outil (6) de découpe se confond avec l'outil (5) de poinçonnage et d'insertion, et travaille au travers de la couche de fourniture (2).

9. Procédé selon l'une quelconque des revendications 1 à 7, où l'outil (6) de découpe est distinct de l'outil (5) de poinçonnage et d'insertion.

10. Procédé selon la revendication 9, où l'outil (6) de découpe est coaxial à l'outil (5) de poinçonnage et d'insertion, et opposé relativement aux couches d'accueil (1) et de fourniture (2).

11. Procédé selon la revendication 10, où l'outil (6) de découpe et le contre-outil (7) sont confondus.

12. Procédé selon l'une quelconque des revendications 9 à 11, où un copeau (8) de découpe est évacué au travers de la couche de fourniture (2).

13. Procédé selon l'une quelconque des revendications 9 à 11, où un copeau (8) de découpe est évacué entre la couche d'accueil (1) et la couche de fourniture (2).

14. Procédé selon l'une quelconque des revendications 1 à 13, où on soude la pastille à une couche de couverture (20) longeant la couche d'accueil (1).

15. Procédé de fabrication d'une carte d'identité comportant au moins une couche d'accueil et deux couches externes transparentes, le procédé comportant les étapes de réalisation d'une fenêtre selon l'une des revendications 1 à 14, puis une étape de lamination des couches externes et de la couche d'accueil.

## Patentansprüche

1. Verfahren für die Herstellung eines Fensters in einer Aufnahmeschicht (1) aus dünnem Kunststoff durch Einsetzen eines Plättchens (3), das aus einer Lieferschicht (2) aus dünnem Kunststoff besteht, das die folgenden Schritte umfasst:
- Ausschneiden einer Öffnung (4) in der Aufnahmeschicht (1) gemäß der Form des zukünftigen Fensters,
- Stanzen der Lieferschicht (2), um ein Plättchen (3) zu bilden, und
- Einsetzen des Plättchens (3) in die Öffnung (4),
wobei das Stanzen und mindestens eine erste Phase des Einsetzens in einer einzigen Verlagerung eines einzigen Stanz- und Einsetzwerkzeugs (5) entlang einer Richtung durchgeführt werden, die von der Lieferschicht (2) bis zur Aufnahmeschicht (1) reicht;
**dadurch gekennzeichnet, dass** ein Gegenwerkzeug (7) koaxial zu dem Stanz- und Einsetzwerkzeug (5) und in Bezug auf die Aufnahmeschicht (1) entgegengesetzt mit dem Stanz- und Einsetzwerkzeug (5) zusammenwirkt und der Verlagerung des Plättchens (3) entgegenwirkt, um das Plättchen (3) in der Öffnung (4) zu positionieren.

2. Verfahren nach Anspruch 1, wobei das Stanz- und Einsetzwerkzeug (5) einen flachen Stempel umfasst.

3. Verfahren nach einem der Ansprüche 1 oder 2, wobei der Einsetzschritt einen Schritt des Schiebens des Plättchens (3) über seine Endposition hinaus, gefolgt von einem Schritt des Gegenschiebens in entgegengesetzter Richtung umfasst.

4. Verfahren nach einem der Ansprüche 1 bis 3, wobei die Form des Plättchens (3) im Wesentlichen identisch mit der Form der Öffnung (4) ist und die Dicke der Lieferschicht (2) im Wesentlichen gleich der Dicke der Aufnahmeschicht (1) ist.

5. Verfahren nach einem der Ansprüche 1 bis 4, wobei das Material des Plättchens (3) transparent ist.

6. Verfahren nach einem der Ansprüche 1 bis 5, wobei die Aufnahme- (1) und die Lieferschicht (2) horizontal angeordnet sind.

7. Verfahren nach einem der Ansprüche 1 bis 5, wobei die Aufnahme- (1) und die Lieferschicht (2) vertikal angeordnet sind.

8. Verfahren nach einem der Ansprüche 1 bis 7, wobei das Schneidwerkzeug (6) mit dem Stanz- und Einsetzwerkzeug (5) übereinstimmt und durch die Lieferschicht (2) hindurch wirkt.

9. Verfahren nach einem der Ansprüche 1 bis 7, wobei das Schneidwerkzeug (6) sich von dem Stanz- und Einsetzwerkzeug (5) unterscheidet.

10. Verfahren nach Anspruch 9, wobei das Schneidwerkzeug (6) koaxial zu dem Stanz- und Einsetzwerkzeug (5) ist und zu den Aufnahme- (1) und Lieferschichten (2) entgegengesetzt ist.

11. Verfahren nach Anspruch 10, wobei das Schneidwerkzeug (6) und das Gegenwerkzeug (7) übereinstimmen.

12. Verfahren nach einem der Ansprüche 9 bis 11, wobei ein Schneidspan (8) durch die Lieferschicht (2) hindurch abgeführt wird.

13. Verfahren nach einem der Ansprüche 9 bis 11, wobei ein Schneidspan (8) zwischen der Aufnahmeschicht (1) und der Lieferschicht (2) abgeführt wird.

14. Verfahren nach einem der Ansprüche 1 bis 13, wobei das Plättchen an eine Deckschicht (20) geschweißt wird, die der Aufnahmeschicht (1) entlangläuft.

15. Verfahren zur Fertigung einer Ausweiskarte, die mindestens eine Aufnahmeschicht und zwei transparente äußere Schichten umfasst, wobei das Verfahren die Schritte des Herstellens eines Fensters nach einem der Ansprüche 1 bis 14 und dann einen Schritt des Laminierens der äußeren Schichten und der Aufnahmeschicht umfasst.

## Claims

1. A method for making a window in an accommodating layer (1) made of thin plastic, by inserting a pad (3) derived from a supply layer (2) made of thin plastic, comprising the following steps:
- cutting an opening (4) in the accommodating layer (1) according to the shape of the future window,
- punching the supply layer (2) to produce a pad (3) and
- inserting the pad (3) in the opening (4),
the punching and at least a first phase of the insertion being made in a single movement of a single punching and insertion tool (5), along a direction from the supply layer (2) to the accommodating layer (1);
**characterized in that** a counter-tool (7) that is coaxial with the punching and insertion tool (5) and opposite relative to the accommodating layer (1), collaborates with the punching and insertion tool (5), and opposes the movement of the pad (3), to position the pad (3) in the opening (4).

2. The method according to claim 1, wherein the punching and insertion tool (5) comprises a flat punch.

3. The method according to any one of claims 1 or 2, wherein the insertion step comprises a step of pushing the pad (3) beyond its final position, followed by a step of counter-pushing in the opposite direction.

4. The method according to any one of claims 1 to 3, wherein the shape of the pad (3) is substantially identical to the shape of the opening (4), and the thickness of the supply layer (2) is substantially equal to the thickness of the accommodating layer (1).

5. The method according to any one of claims 1 to 4, wherein the material of the pad (3) is transparent.

6. The method according to any one of claims 1 to 5, wherein the accommodating (1) and supply (2) layers are disposed horizontally.

7. The method according to any one of claims 1 to 5, wherein the accommodating (1) and supply (2) layers are disposed vertically.

8. The method according to any one of claims 1 to 7, wherein the cutting tool (6) is coincident with the punching and insertion tool (5), and works through the supply layer (2) .

9. The method according to any one of claims 1 to 7, wherein the cutting tool (6) is separate from the punching and insertion tool (5).

10. The method according to claim 9, wherein the cutting tool (6) is coaxial with the punching and insertion tool (5), and opposite relative to the accommodating (1) and supply (2) layers.

11. The method according to claim 10, wherein the cutting tool (6) and the counter-tool (7) are coincident with each other.

12. The method according to any one of claims 9 to 11, wherein a cutting chip (8) is discharged through the supply layer (2).

13. The method according to any one of claims 9 to 11, wherein a cutting chip (8) is discharged between the accommodating layer (1) and the supply layer (2).

14. The method according to any one of claims 1 to 13, wherein the pad is welded to a cover layer (20) housing the accommodating layer (1).

15. A method for manufacturing an identity card including at least one accommodating layer and two transparent outer layers, the method including the steps of making a window according to any of claims 1 to 14, then a step of laminating the outer layers and the accommodating layer.
